# EUROPEAN PATENT APPLICATION

(11) **EP 4 576 285 A1**
(43) Date of publication of application: **25.06.2025**
(21) Application number: 24218251.7
(22) Date of filing: 09.12.2024
(51) Int. Cl.: H01M 8/0662, H01M 8/2475, C25B 1/04

(54) **VENTILATION ASSEMBLIES FOR ELECTROCHEMICAL CELL SYSTEMS**

(30) Priority: 20.12.2023 US 202363612809 P
(71) Applicant: Bloom Energy Corporation, San Jose, CA 95134 (US)
(72) Inventor: CARRANZA, Santina G., San Jose 95134 (US); PENNA, Lorenzo, San Jose 95134 (US); JUDAY, Samuel, San Jose 95134 (US); DACO, Christian, San Jose 95134 (US); MAHLER, Jessica, San Jose 95134 (US)
(74) Representative: Wichmann, Hendrik

(57) **Abstract**

An electrochemical cell module includes a module housing and electrochemical cells located in the module housing and configured to generate power or hydrogen and to output an exhaust. The module also includes a vent housing attached to the module housing, an exhaust duct located in the vent housing, and a filter cartridge located in the exhaust duct. The exhaust duct contains an inlet that is configured to receive the exhaust from the module housing, and an outlet that is configured to direct the exhaust away from the module housing. The filter cartridge contains a particulate filter.

## Description

### TECHNICAL FIELD

The present disclosure generally relates to electrochemical systems, and more particularly to ventilation assemblies for power modules of fuel cell systems.

### BACKGROUND

Fuel cells, such as solid oxide fuel cells, are electrochemical devices which can convert energy stored in fuels to electrical energy with high efficiencies. High temperature fuel cells include solid oxide and molten carbonate fuel cells. These fuel cells may operate using hydrogen and/or hydrocarbon fuels or hydrogen containing fuels such as ammonia. There are classes of fuel cells, such as the solid oxide regenerative fuel cells, that also allow reversed operation, such that oxidized fuel can be reduced back to unoxidized fuel using electrical ener gy as an input.

### SUMMARY

According to various embodiments, an electrochemical cell module includes a module housing and electrochemical cells located in the module housing and configured to generate power or hydrogen and to output an exhaust. The electrochemical cell module also includes a vent housing attached to the module housing, an exhaust duct located in the vent housing, and a filter cartridge located in the exhaust duct. The exhaust duct contains an inlet that is configured to receive the exhaust from the module housing, and an outlet that is configured to direct the exhaust away from the module housing. The filter cartridge contains a particulate filter.

According to various embodiments, a method of operating the electrochemical cell module comprises operating the electrochemical cells to generate power or hydrogen and to output an exhaust; vertically lifting the filter cartridge out of the exhaust duct using a servicing tool while the electrochemical cells are operating; and vertically lowering a replacement filter cartridge containing a replacement particulate filter into the exhaust duct while the electrochemical cells are operating.

According to various embodiments, a vent assembly for an electrochemical cell module comprises: a vent housing comprising a first duct compartment, a second duct compartment; and a central compartment located between the first and second duct compartments; a first exhaust duct located in the first duct compartment and comprising an inlet that is located on a first side of the first exhaust duct and an outlet that is located on an opposing second side of the first exhaust duct; a second exhaust duct located in the second duct compartment and comprising an inlet that is located on a first side of the second exhaust duct and an outlet that is located on an opposing second side of the second exhaust duct; a first filter cartridge configured to be inserted into the first exhaust duct and comprising a first particulate filter; and a second filter cartridge configured to be inserted into the second exhaust duct and comprising a second particulate filter.

According to various embodiments, a method of operating an electrochemical cell module wherein electrochemical cells are located in a module housing, includes: generating either power or hydrogen from the electrochemical cells located in the module housing; generating exhaust from the electrochemical cells located in the module housing; and venting the exhaust through a vent housing attached to the module housing, wherein venting the exhaust further comprises: passing the exhaust through an exhaust duct having an inlet that receives the exhaust from the module housing and an outlet that directs the exhaust away from the module housing; and passing the exhaust through a removable filter cartridge located in the exhaust duct, wherein the removable filter cartridge comprises a particulate filter.

### BRIEF DESCRIPTION OF THE DRAWINGS

The accompanying drawings, which are incorporated herein and constitute part of this specification, illustrate examples of the disclosed devices and methods, and together with the general description given above and the detailed description given below, serve to explain the features of the invention.
FIG. 1 is a perspective view of a combined heat and power (CHP) system, according to various embodiments of the present disclosure.
FIG. 2 is a perspective view of a power module of the system of FIG. 1, according to various embodiments of the present disclosure.
FIG. 3A is an exploded perspective view of a vent assembly of the power module of FIG. 2, FIG. 3B is a partially transparent plan view of the vent assembly of FIG. 3A, and FIG. 3C is a partially transparent perspective view of the vent assembly of FIG 3A, according to one embodiment of the present disclosure.
FIG. 4A is a perspective view showing the insertion of a filter cartridge into an exhaust duct, FIG. 4B is a cross-sectional view of the filter cartridge inserted in the exhaust duct, FIG. 4C is a photograph of the bottom of the filter cartridge, and FIG. 4D is a photograph taken from the top of the exhaust duct, according to one embodiment of the present disclosure.
FIGS. 5-8 are perspective views of power modules including alternative vent assemblies, according to various alternative embodiments of the present disclosure.

### DETAILED DESCRIPTION

Various examples will be described in detail with reference to the accompanying drawings. Wherever possible, the same reference numbers will be used throughout the drawings to refer to the same or like parts. References made to particular examples and implementations are for illustrative purposes and are not intended to limit the scope of the invention or the claims. It is also understood that the examples shown in the figures are not mutually exclusive. Features shown in one example (e.g., in one figure) may be included in other examples (e.g., in other figures).

Ranges can be expressed herein as from "about" one particular value, and/or to "about" another particular value. When such a range is expressed, examples include from the one particular value and/or to and including the other particular value. In some embodiments, a value of "about X" may include values of +/- 1% X. It will be further understood that the endpoints of each of the ranges are significant both in relation to the other endpoint, and independently of the other endpoint.

To increase efficiency of electrochemical cell systems, such as fuel cell systems or electrolyzer systems, heat may be extracted from system exhaust, such as from the fuel cell system exhaust (e.g., cathode exhaust). For example, system exhaust may be provided to thermal energy systems in combined heat and power (CHP) systems. However, thermal energy systems may be degraded by particulates that may be present in electrochemical cell system exhaust. As such, conventional thermal energy systems may include large particulate filters that may require periodic third party servicing and that may increase CHP system space requirements and turning off the CHP system during servicing.

Embodiments of the present disclosure provide more compact filter assemblies that reduce space requirements. Furthermore, some embodiment filter assemblies may be "hot swappable" assemblies which can be removed or replaced without turning off the electrochemical cell systems. This reduces the downtime of the system. The filter assemblies may be used in CHP systems or in non-CHP systems, such as in fuel cell power generation systems or in electrolyzer cell hydrogen generation systems.

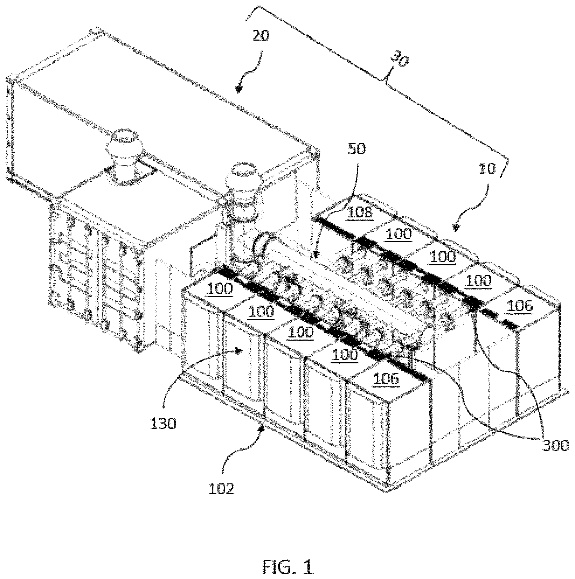

FIG. 1 is a perspective view of a combined heat and power (CHP) system 30, according to various embodiments of the present disclosure. Referring to FIG. 1, the CHP system 30 may include an electrochemical cell system 10, such as a fuel cell system configured to generate electrical power or an electrolyzer system configured to generate hydrogen from water, and a thermal energy system 20 configured to recover and utilize heat generated by the electrochemical cell system 10.

In one embodiment, the electrochemical cell system 10 comprises a fuel cell system, which may include one or more power modules 100, fuel processing modules 106, and power conditioning (e.g., electrical output) modules 108, which may be located on a common base 102. Each of the modules 100, 106, 108 may include its own housing or cabinet that is accessible by a door 130. Door 130 may be opened by swinging up or swinging to the side. The base 102 may provide a common space for wiring cables, power lines, and conduits that may connect the power modules 100 with the fuel processing and/or power conditioning modules 106, 108. For example, the power modules 100 may be fluidly connected with the fuel processing modules 106 through fluid conduits (e.g., pipes) provided in the base 102, and the power conditioning module 108 may be electrically connected to the power modules 100 through wires and/or cables provided in the base 102. The base 102 may be formed of concrete and/or metal, depending on installation location and/or installation requirements.

The power modules 100 may include one or more stacks of electrochemical cells (e.g., fuel cells or electrolyzer cells) located in a hotbox (not shown for clarity). Examples of electrochemical cells include solid oxide fuel cells or electrolyzer cells having a ceramic oxide electrolyte separated by conductive interconnect plates. Other fuel cell or electrolyzer types, such as proton exchange membrane (PEM), molten carbonate, phosphoric acid, etc., may also be used. The cell stacks may include externally and/or internally manifolded stacks. For example, the cell stacks may be internally manifolded for fuel and air with fuel and air risers extending through openings in the fuel cell layers and/or in the interconnect plates between the cells.

The electrochemical cell stacks may alternatively be internally manifolded for fuel and externally manifolded for air, where only the fuel inlet and exhaust risers extend through openings in the fuel cell layers and/or in the interconnect plates between the fuel cells, as described in U.S. Patent No. 7,713,649, issued on May 11, 2010, the content of which is expressly incorporated herein by reference in its entirety. The electrochemical cells may have different fuel/air flow configurations. For example, each fuel cell may have a cross flow configuration (where air and fuel flow roughly perpendicularly to each other on opposite sides of the electrolyte in each fuel cell), a counter flow parallel configuration (where air and fuel flow roughly in parallel to each other but in opposite directions on opposite sides of the electrolyte in each fuel cell), and/or a co-flow parallel configuration (where air and fuel flow roughly in parallel to each other in the same direction on opposite sides of the electrolyte in each fuel cell).

In a fuel cell system 10, the fuel processing module 106 may include components used for pre-processing a fuel, such as, for example, adsorption beds (e.g., de-sulfurizer and/or other impurity adsorption beds). The fuel processing module 106 may be configured to process different types of fuels. For example, the fuel processing module 16 may include at least one of a diesel fuel processing module, a natural gas fuel processing module, a biogas fuel processing module, or an ethanol fuel processing module in the same cabinet or in separate cabinets. A different adsorption bed composition tailored for a particular fuel may be provided in each fuel processing module 106. The fuel processing module 106 may process at least one of the following fuels: natural gas provided from a pipeline, compressed natural gas, methane, propane, liquid petroleum gas, gasoline, diesel, home heating oil, kerosene, JP-5, JP-8, aviation fuel, hydrogen, ammonia, ethanol, methanol, syn-gas, biogas, biomethane, biodiesel and other suitable hydrocarbon or hydrogen containing fuels. In some examples, a reformer may be included in the fuel processing module 106.

In a fuel cell system 10, the power conditioning module 108 may include components for converting DC power generated by a fuel cell stack including in the power module 100 to AC power (e.g., DC/DC and DC/AC converters described in U.S. Patent No. 7,705,490, issued April 27, 2010, the content of which is expressly incorporated herein by reference in its entirety), electrical connectors for AC power output to a power grid, circuits for managing electrical transients, and a system controller (e.g., a computer or dedicated control logic device or circuit). The power conditioning module 108 may be configured to convert DC power from the fuel cell modules to different AC voltages and frequencies. Designs for 208V, 60Hz; 480V, 60Hz; 415V, 50Hz and other common voltages and frequencies may be provided. The power conditioning module 108 may be electrically connected with the one or more power modules 100, e.g., via wires provided in the base 102, to provide power to the power modules 100 and receive power generated by the power modules 100.

While two rows of power modules 100 are shown in FIG. 1, the fuel cell system 10 may include a single row or multiple rows of power modules 100. For example, the fuel cell system 10 may include two or more rows of power modules 100 stacked back to back, end to end, side by side, or on top of one another.

The fuel cell system 10 may include an exhaust manifold 50 or conduit configured to provide cathode exhaust output from the power modules 100 to the thermal energy system 20. In particular, the exhaust manifold 50 may be fluidly connected to vent assemblies 300 of the power modules 10, as described in detail below. The thermal energy system 20 may be any suitable system capable of extracting and utilizing heat generated by the fuel cell system 10. For example, the thermal energy system 20 may include a steam generator, an adsorption chiller, a thermoelectric generator, a hot water heater, a Rankine cycle device, a combination thereof, or the like.

In some embodiments, the thermal energy system 20 may be omitted, and the fuel cell system 10 exhaust may be vented without heat recovery. For example, cathode exhaust and/or cabinet air may be vented from the vent assemblies directly to the atmosphere or to an exhaust manifold 50 that is not connected to a thermal energy system. In various embodiments, the fuel cell system 10 may be located outdoors and system exhaust may be directly vented, or the fuel cell system 10 may be located indoors and system exhaust may be provided to an exhaust manifold 50 and vented outdoors or provided to a thermal energy system.

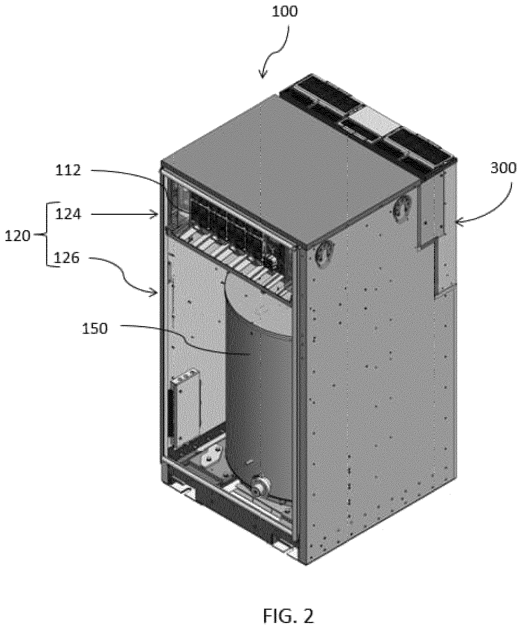

FIG. 2 is a front side perspective view of a power module 100 of FIG. 1 with its door 130 removed, according to various embodiments of the present disclosure. Referring to FIGS. 1 and 2, the power module 100 may include a module housing 120 including an electrical cabinet 124 and a fuel cell cabinet 126. The electrical cabinet 124 may be configured to contain one or more electronics modules 112 which may include one or more DC/DC converters or other electrical components. The electronics modules 112 may occupy multiple slots provided in the electrical cabinet 124. The fuel cell cabinet 126 may be configured to contain a hotbox 150 containing one or more electrochemical cell stacks and balance of plant (BOP) components (not shown for clarity) including blowers, valves, and control boards, sensors, etc.

In one embodiment, the ventilation assembly 300 may be located on the backside of the module housing 120 opposite to the door 130. The ventilation module 300 may be configured to receive cabinet air from the module housing 120 (e.g., electrical cabinet 124) and cathode exhaust (e.g., fuel cell exhaust) output from the hotbox 150.

The fuel cell exhaust may be significantly hotter than the cabinet air. For example, the cathode exhaust may have a temperature of about 300 °C or more. As such, the vent assembly 300 may be configured to emit separate cabinet air and cathode exhaust streams. In particular, the vent assembly 300 may be configured to provide the cathode exhaust to the exhaust manifold 50 (see FIG. 1) and may separately vent the cabinet air, in order to improve heat extraction efficiency.

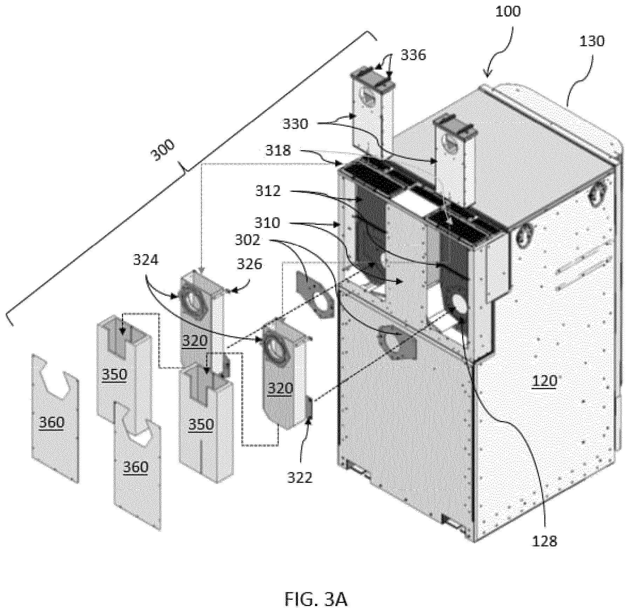

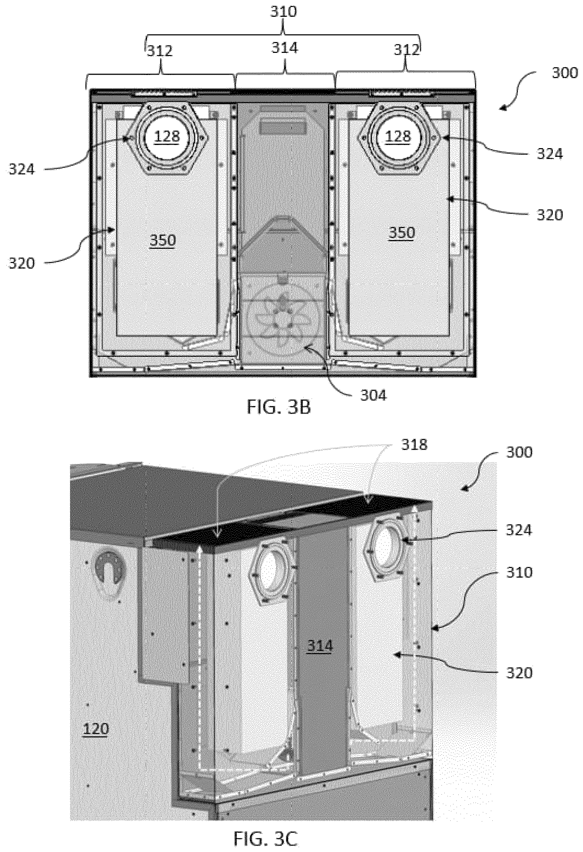

FIG. 3A is an exploded perspective view of the vent assembly 300 of the power module 100 of FIG. 2, FIG. 3B is a partially transparent plan view of the vent assembly 300, and FIG. 3C is a partially transparent perspective view of the vent assembly 300. Referring to FIGS. 3A-3C, the vent assembly 300 may be configured to output cabinet air and filtered cathode exhaust from the power module 100.

The vent assembly 300 may be attached to the module housing 120, such that the vent assembly 300 does not significantly increase the footprint of the power module 100. In particular, the vent assembly 300 may be attached to a recessed and/or stepped portion of the module housing 120, such that all or substantially all of the vent assembly 300 vertically overlaps with an area defined by the perimeter of the module housing 120.

The vent assembly 300 may include adaptor plates 302, a vent housing 310, exhaust ducts 320, filter cartridges 330, thermal insulation layers 350, and cover plates 360. The vent housing 310 may be attached to the back side of the module housing 120, opposite to the door 130, which is located on the front side of the module housing 120.

The vent housing 310 may at least partially define duct compartments 312 and a central compartment 314 (FIG. 3B) located between the duct compartments 312. The duct compartments 312 may be configured to receive the exhaust ducts 320. Module outlets 128 of the module housing 120, which may be configured to receive cathode exhaust from electrochemical cell stacks (e.g., fuel cell stacks) located in the module housing 120, may face and/or be located in the duct compartments 312.

Debris screens 318 (FIG. 3C) may be located on top of the vent housing 310 to prevent or reduce debris from entering the vent housing 310. A fan 304 (FIG. 3B) may be located in the central compartment 314. The fan 304 may be configured to pull module cabinet air into the vent housing 310 from a cabinet exhaust outlet (not shown) of the module housing 120. The vent housing 310 may be configured to direct the cabinet air laterally below the exhaust ducts 320 from the central compartment 314 and then upward toward the debris screens 318, such that the cabinet air may be exhausted from the vent assembly 300, as shown by the dashed lines of FIG. 3C. The screens 318 may be at least partially detachable from the vent housing 310.

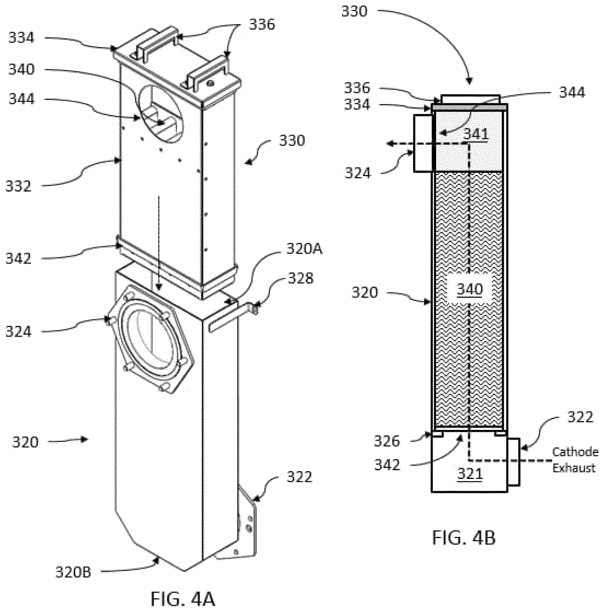

The exhaust ducts 320 may be generally rectangular structures having an open first end 320A and an opposing closed second end 320B (*see* FIG. 4A). However, other shapes (e.g., cylindrical, etc.) may also be used. The exhaust ducts 320 may each include an inlet 322 located closer to the second end 320B and an outlet 324 located closer to the first end 320A. For example, the inlet 322 and the outlet 324 may be located on opposing sides of the exhaust duct 320, and the outlet 324 may be located above the inlet 322 in a vertical direction.

The exhaust ducts 320 may be located in the duct compartments 312 of the vent housing 310 and attached to the module housing 120. For example, the inlets 322 of the exhaust ducts 320 may be coupled to the module exhaust outlets 128 by the adaptor plates 302. In other embodiments, the inlets 322 may be directly coupled to the module exhaust outlets 128, and the adaptor plates 302 may be omitted. The exhaust ducts 320 may also include mounting brackets 328 (shown in FIG. 4A) that may also be used to couple the exhaust ducts 320 to the module housing 120.

The filter cartridges 330 may be detachably inserted into the exhaust ducts 320. In one embodiment, the filter cartridges 330 may be inserted into the openings in the top of the exhaust ducts 320, and be retained in the exhaust ducts 320 by gravity and/or friction with the exhaust duct 320 sidewalls. The filter cartridges 330 may be removed from the exhaust ducts 320 by removing the screens 318 and vertically lifting the filter cartridges 330 out of the exhaust ducts using one or more handles 336 located on top of the filter cartridges 330. In alternative configurations, the handles 336 may be omitted, and recesses or protrusions may be located in or on the filter cartridges 330 to facilitate the vertical removal of the filter cartridges 330 from the exhaust ducts 320.

The insultation layers 350 may cover at least a portion of the outer surface of the exhaust ducts 320. The insulation layers 350 may comprise a rigid container formed of a thermally insulating material. Alternatively, the insulation layers 350 may comprise a pouch formed from a flexible thermally insulating material.

The cover plates 360 may be attached to the vent housing 310 so as to cover the insultation layers 350 and the exhaust ducts 320. In particular, outlets 324 of the exhaust ducts 320 may extend through recesses formed in the insulation layers 350 and the cover plates 360, such that the outlets 324 are exposed on the back side of the vent assembly 300. The outlets 324 may be coupled to an exhaust manifold 50, as shown in FIG. 1.

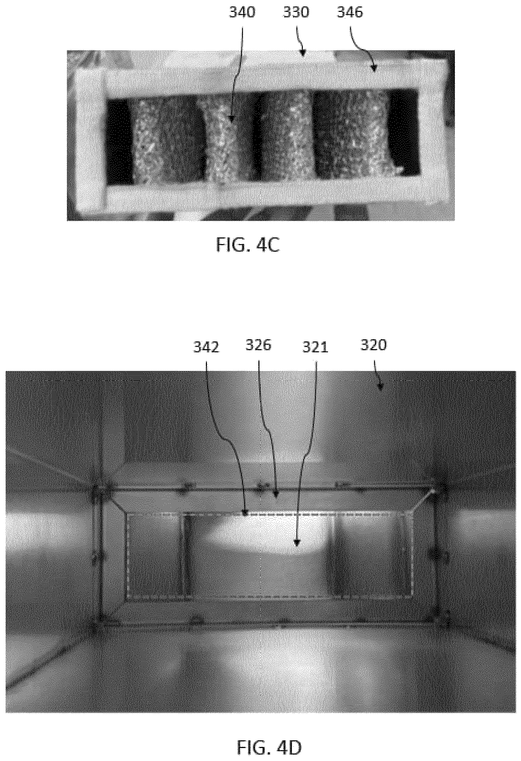

FIG. 4A is a perspective view showing the vertical insertion of the filter cartridge 330 into the exhaust duct 320, FIG. 4B is a cross-sectional view of the filter cartridge 330 inserted in the exhaust duct 320, FIG. 4C is a photograph of the bottom of the filter cartridge 330, and FIG. 4D is a photograph taken from the top of the exhaust duct 320 (e.g., a photograph taken from the point of view above top portion (e.g., open first end 320A) looking down towards the second end 320B inside of the exhaust duct 320), according to various embodiments of the present disclosure.

Referring to FIGS. 4A-4D, the filter cartridge 330 may include a cartridge housing 332, a cap plate 334, and a particulate filter 340 located within the cartridge housing 332. The cartridge housing 332 may include an inlet 342 located below the filter 340 and an outlet 344 located above the filter 340. In one embodiment, inlet 342 may comprise an open bottom surface of the cartridge housing 332, while the outlet may comprise an opening in an upper sidewall of the cartridge housing 332. The cap plate 334 may be attached to an upper end of the cartridge housing 332 and may be configured to mate with and/or seal the first (e.g., upper) end 320A of the exhaust duct 320.

The cap plate 334 may include one or more handles 336. The handles 336 may be used to physically manipulate the filter cartridges 330. For example, the handles 336 may be configured to mate with a servicing tool, such as a rod having a forked end configured to mate with the handles 336, in order to facilitate insertion and removal of the filter cartridge 330 to and from the exhaust duct 320. For example, the filter cartridge 330 may be vertically inserted into the first (e.g., upper) end 320A of exhaust duct 320, such that the outlet 344 of the filter cartridge 330 is aligned with the outlet 324 of the exhaust duct 320, and the cap plate 334 mates with the first end 320A of the exhaust duct 320.

In one embodiment shown in FIGS. 4B and 4D, the exhaust duct 320 may include an internal support flange 326 located inside the exhaust duct 320 above the inlet 322 and below the outlet 324 of the exhaust duct 320. The support flange 326 is configured to support the filter cartridge 330 in the exhaust duct 320 above the inlet 322 and below the outlet 324 of the exhaust duct 320. An inlet chamber 321 of the exhaust duct 320 is formed below the filter cartridge 330 supported by the support flange 326.

In one embodiment shown in FIG. 4C, an insulation layer 346, such as a ceramic wool insulation layer may be located between the inlet 342 of the filter cartridge 330 and the support flange 326, in order to improve sealing. The insulation layer 346 may be mounted to the bottom of the filter cartridge 330 and/or to the top of the support flange 326.

The particulate filter 340 may be configured to capture particulate material, such as metal and/or other material particulates, from the hot cathode exhaust. Accordingly, the particulate filter 340 may be formed of a material capable of withstanding a temperature of at least 300 °C, such as temperature ranging from about 300 °C to about 450 °C. For example, in some embodiments, the particulate filter 340 may be formed of a metal mesh, such as an aluminum mesh. The particulate filter 340 may be folded in a pleated or Z-shaped configuration, in order to increase the surface area of the particulate filter 340.

As shown by the dashed line in FIG. 4B, cathode exhaust provided to the inlet 322 may flow horizontally into the inlet chamber 321 where the cathode exhaust changes direction and flows vertically into the filter cartridge 330 via the inlet 342. The cathode exhaust then flows vertically through the particulate filter 340. The cathode exhaust exits the top of the particulate filter 340 and then flows into an outlet chamber 341 of the filter cartridge 330 located above the particulate filter 340. The cathode exhaust changes direction in the outlet chamber 341 to flow horizontally through the outlets 344, 324 and to exit the filter cartridge 330 and the exhaust duct 320. Accordingly, the cathode exhaust may enter the bottom of the first side of the exhaust duct 320 and may exit the top of the opposing second side of the exhaust duct 320, at the back of the power module, as shown in FIGS. 3A, 4A and 4B.

In one embodiment, the vent assembly 300 may be located within the footprint of the power module 100. In other words, the vent assembly 300 may be configured to output filtered cathode exhaust from the power module 100 without significantly increasing the footprint and/or space requirements of the power module 100.

In one embodiment, the CHP system 10 includes the vent assemblies 300 that are fluidly connected to a thermal energy system 20 that does not include particulate filters. In other words, the vent assemblies 300 allow for the omission of particulate filters from the thermal energy system 20. Such CHP systems 10 may include thermal energy systems 20 that are easier to maintain and more compact.

Referring to FIGS. 3A-4D, the power module 100 may be configured to permit easy servicing of the vent assemblies 300 while the power module 100 is in operation (e.g., while the power module 100 generates electricity or produces hydrogen). In particular, filter cartridges 330 having clogged particulate filters 340 may be replaced by a technician positioned at the front of the power module 100, adjacent to the door 130. In one embodiment, the technician may utilize a servicing tool (e.g., a rod with a hook or prongs) to open the screens 318 to provide access to the inside of the vent assembly 300. The servicing tool may then be connected to the handles 336 of each filter cartridge 330 and be used to remove the filter cartridge 330 from the exhaust duct 320. The process may then be reversed to install filter cartridges 330 having clean particulate filters 340 in the vent assembly 300 while the power module 100 is operating and hot cathode exhaust flows through the vent assemblies 300.

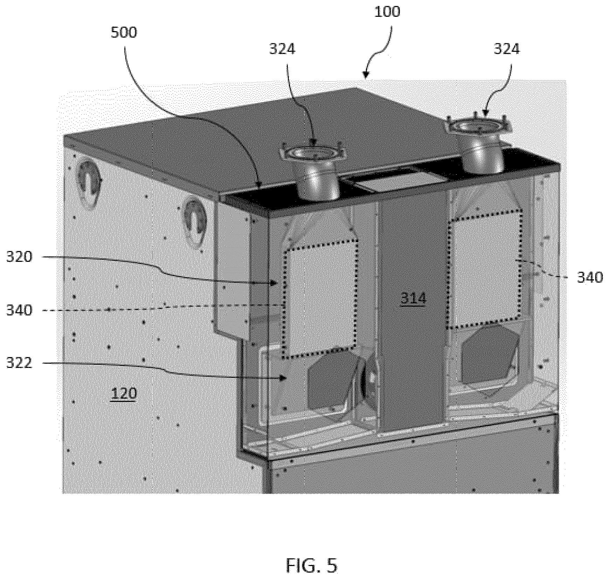

FIG. 5 is a partially transparent perspective view of a power module 100 including an alternative vent assembly 500, according to a first alternative embodiment of the present disclosure. The vent assembly 500 may be similar to the vent assembly 300, as such, only the differences therebetween will be discussed in detail.

Referring to FIG. 5, the vent assembly 500 may include exhaust ducts 320 including inlets 322 and outlets 324, and particulate filters 340 located within the exhaust ducts 320. The outlets 324 may extend above the power module 100. Therefore, cathode exhaust may be routed to the top of the power module 100, such that the power module 100 may be connected to an exhaust manifold 50 routed above the power module 100.

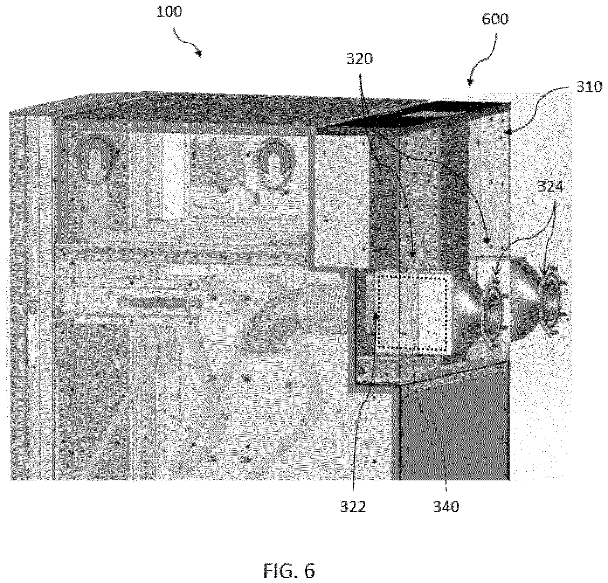

FIG. 6 is a partially transparent perspective view of a power module 100 including an alternative vent assembly 600, according to a second alternative embodiment of the present disclosure. The vent assembly 600 may be similar to the vent assembly 500, as such, only the differences therebetween will be discussed in detail.

Referring to FIG. 6, the vent assembly 600 may include exhaust ducts 320 including inlets 322 and outlets 324, and particulate filters 340 located within the exhaust ducts 320. The exhaust ducts 320 may protrude from the vent housing 310, such that the outlets 324 are located on the back side of the power module 100. In other words, portions of the exhaust ducts 320 may extend from the backside of the power module 100.

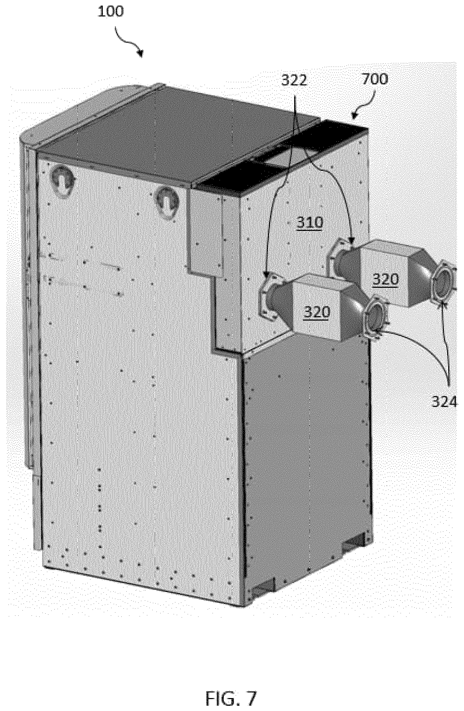

FIG. 7 is a perspective view of a power module 100 including an alternative vent assembly 700, according to a third alternative embodiment of the present disclosure. The vent assembly 700 may be similar to the vent assembly 600, as such, only the differences therebetween will be discussed in detail.

Referring to FIG. 7, the vent assembly 700 may include exhaust ducts 320 including inlets 322 and outlets 324, and particulate filters (not shown) located within the exhaust ducts 320. The inlets 322 of the exhaust ducts 320 may be attached to the outer surface of the vent housing 310. In this embodiment, the exhaust ducts 320 are located outside the footprint of the power module 100.

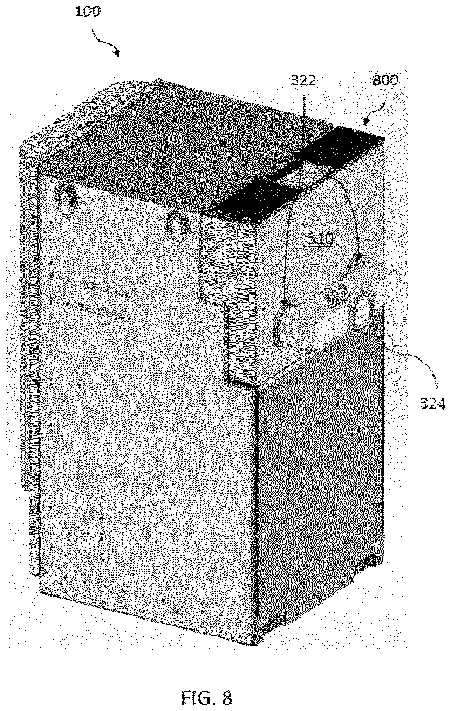

FIG. 8 is a perspective view of a power module 100 including an alternative vent assembly 800, according to a fourth alternative embodiment of the present disclosure. The vent assembly 800 may be similar to the vent assembly 700, as such, only the differences therebetween will be discussed in detail.

Referring to FIG. 8, the vent assembly 800 may include a single exhaust duct 320 including plural inlets 322 and one common outlet 324, and a particulate filter (not shown) located within the exhaust duct 320. The inlets 322 of the exhaust duct 320 may be attached to the outer surface of the vent housing 310, and the exhaust duct may extend horizontally across the surface of the vent housing 310. Accordingly, the exhaust duct 320 may have a more compact configuration than the exhaust ducts 320 of FIG. 7. In this embodiment, the exhaust duct 320 is also located outside the footprint of the power module 100.

Various embodiments of the present disclosure provide fuel cell systems that benefit the climate by reducing greenhouse gas emissions.

Although only a few examples have been described in detail in this disclosure, many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter described herein. Some elements shown as integrally formed may be constructed of multiple parts or elements, the position of elements may be reversed or otherwise varied, and the nature or number of discrete elements or positions may be altered or varied. The order or sequence of any process, logical algorithm, or method steps may be varied or re-sequenced according to alternative examples. Other substitutions, modifications, changes, and omissions may also be made in the design, operating conditions, and arrangement of the various examples without departing from the scope of the present disclosure. Any one or more features of any example may be used in any combination with any one or more other features of one or more other examples. It is intended that the specification and examples be considered as exemplary only, with a true scope being indicated by the following claims and their equivalents.

The invention also refers to the following embodiments, wherein the term "claim" means "embodiment":
1. An electrochemical cell module, comprising:
   a module housing;
   electrochemical cells located in the module housing and configured to generate power or hydrogen and to output an exhaust;
   a vent housing attached to the module housing;
   an exhaust duct located in the vent housing, the exhaust duct comprising an inlet that is configured to receive the exhaust from the module housing, and an outlet that is configured to direct the exhaust away from the module housing; and
   a filter cartridge located in the exhaust duct and comprising a particulate filter.
2. The electrochemical cell module of claim 1, further comprising:
   a thermal insulation layer located on the exhaust duct; and
   a cover plate attached to the vent housing and covering the thermal insulation layer.
3. The electrochemical cell module of claim 1, wherein the particulate filter comprises a metal mesh that is configured to remove particulates from the exhaust flowing through the exhaust duct.
4. The electrochemical cell module of claim 1, wherein the exhaust duct comprises an open first end through which the filter cartridge is removably inserted.
5. The electrochemical cell module of claim 4, wherein the filter cartridge comprises a cap plate configured to mate with the first end of the exhaust duct, the cap plate comprising handles configured to mate with a servicing tool.
6. The electrochemical cell module of claim 1, wherein:
   the outlet of the exhaust duct is located above the inlet of the exhaust duct; and
   the vent housing is located within a footprint of the module housing.
7. The electrochemical cell module of claim 6, wherein the exhaust duct comprises an internal support bracket configured to support the filter cartridge inside the exhaust duct above the inlet and below the outlet of the exhaust duct.
8. The electrochemical cell module of claim 6, further comprising:
   a fan located in the vent housing and configured to pull cabinet exhaust from the module housing;
   an additional exhaust duct located in the vent housing, the additional exhaust duct comprising an additional inlet that is configured to receive the cathode exhaust from the module housing, and an additional outlet that is configured to direct the cathode exhaust away from the module housing; and
   an additional filter cartridge located in the additional exhaust duct and comprising an additional particulate filter.
9. The electrochemical cell module of claim 8, wherein:
   the vent housing comprises:
      a first duct compartment;
      a second duct compartment; and
      a central compartment located between the first and second duct compartments;
   the exhaust duct is located in the first duct compartment, wherein the inlet is located on a front side of the exhaust duct and the outlet is located on an opposing back side of the exhaust duct;
   the additional exhaust duct is located in the second duct compartment, wherein the additional inlet is located on a front side of the additional exhaust duct and the additional outlet is located on an opposing back side of the additional exhaust duct;
   the fan is located in the central compartment; and
   the vent housing is configured to guide the cabinet exhaust in a vertical direction, such that the cabinet exhaust is vented from a top of the vent assembly.
10. The electrochemical cell module of claim 1, wherein:
   the electrochemical cells comprise fuel cells; and
   the exhaust comprises a cathode exhaust of the fuel cells.
11. A combined heat and power (CHP) system comprising:
   the electrochemical cell module of claim 1;
   a thermal system; and
   an exhaust manifold configured to connect the outlets of the exhaust ducts to the thermal system.
12. The CHP system of claim 11, wherein the thermal system comprises a steam generator, an adsorption chiller, a thermoelectric generator, a hot water heater, a Rankine cycle device, or a combination thereof.
13. A method of operating the electrochemical cell module of claim 1, the method comprising:
   operating the electrochemical cells to generate power or hydrogen and to output an exhaust;
   vertically lifting the filter cartridge out of the exhaust duct using a servicing tool while the electrochemical cells are operating; and
   vertically lowering a replacement filter cartridge containing a replacement particulate filter into the exhaust duct while the electrochemical cells are operating.
14. The method of claim 13, further comprising providing the exhaust to a thermal system.
15. A vent assembly for an electrochemical cell module, the vent assembly comprising:
   a vent housing comprising:
      a first duct compartment;
      a second duct compartment; and
      a central compartment located between the first and second duct compartments;
   a first exhaust duct located in the first duct compartment and comprising an inlet that is located on a front side of the first exhaust duct and an outlet that is located on an opposing back side of the first exhaust duct;
   a second exhaust duct located in the second duct compartment and comprising an inlet that is located on a front side of the second exhaust duct and an outlet that is located on an opposing back side of the second exhaust duct;
   a first filter cartridge configured to be inserted into the first exhaust duct and comprising a first particulate filter; and
   a second filter cartridge configured to be inserted into the second exhaust duct and comprising a second particulate filter.
16. The vent assembly of claim 15, wherein the first and second particulate filters each comprise a metal mesh.
17. The vent assembly of claim 15, further comprising:
   first and second thermal insulation layers located on the first and second exhaust ducts, respectively; and
   first and second cover plates attached to the vent housing and covering the first and second thermal insulating layers, respectively.
18. The vent assembly of claim 15, wherein:
   the first and second filter cartridges each comprise cap plates configured to respectively seal open ends of the first and second exhaust ducts; and
   the cap plates each comprise handles configured to mate with a servicing tool.
19. The vent assembly of claim 15, wherein the first and second exhaust ducts each comprise a respective first and second internal support bracket configured to respectively support the first and second filter cartridges.
20. The vent assembly of claim 15, further comprising a fan located in the central compartment.
21. A method of operating an electrochemical cell module wherein electrochemical cells are located in a module housing, the method comprising:
   generating either power or hydrogen from the electrochemical cells located in the module housing;
   generating exhaust from the electrochemical cells located in the module housing; and
   venting the exhaust through a vent housing attached to the module housing, wherein venting the exhaust further comprises:
      passing the exhaust through an exhaust duct having an inlet that receives the exhaust from the module housing and an outlet that directs the exhaust away from the module housing; and
      passing the exhaust through a removable filter cartridge located in the exhaust duct, wherein the removable filter cartridge comprises a particulate filter.

## Claims

1. An electrochemical cell module, comprising:
a module housing;
electrochemical cells located in the module housing and configured to generate power or hydrogen and to output an exhaust;
a vent housing attached to the module housing;
an exhaust duct located in the vent housing, the exhaust duct comprising an inlet that is configured to receive the exhaust from the module housing, and an outlet that is configured to direct the exhaust away from the module housing; and
a filter cartridge located in the exhaust duct and comprising a particulate filter.

2. The electrochemical cell module of claim 1, further comprising:
a thermal insulation layer located on the exhaust duct; and
a cover plate attached to the vent housing and covering the thermal insulation layer.

3. The electrochemical cell module of claim 1, wherein the particulate filter comprises a metal mesh that is configured to remove particulates from the exhaust flowing through the exhaust duct.

4. The electrochemical cell module of claim 1, wherein the exhaust duct comprises an open first end through which the filter cartridge is removably inserted.

5. The electrochemical cell module of claim 4, wherein the filter cartridge comprises a cap plate configured to mate with the first end of the exhaust duct, the cap plate comprising handles configured to mate with a servicing tool.

6. The electrochemical cell module of claim 1, wherein:
the outlet of the exhaust duct is located above the inlet of the exhaust duct; and
the vent housing is located within a footprint of the module housing.

7. The electrochemical cell module of claim 6, wherein the exhaust duct comprises an internal support bracket configured to support the filter cartridge inside the exhaust duct above the inlet and below the outlet of the exhaust duct.

8. The electrochemical cell module of claim 6, further comprising:
a fan located in the vent housing and configured to pull cabinet exhaust from the module housing;
an additional exhaust duct located in the vent housing, the additional exhaust duct comprising an additional inlet that is configured to receive the cathode exhaust from the module housing, and an additional outlet that is configured to direct the cathode exhaust away from the module housing; and
an additional filter cartridge located in the additional exhaust duct and comprising an additional particulate filter.

9. The electrochemical cell module of claim 8, wherein:
the vent housing comprises:
a first duct compartment;
a second duct compartment; and
a central compartment located between the first and second duct compartments;
the exhaust duct is located in the first duct compartment, wherein the inlet is located on a front side of the exhaust duct and the outlet is located on an opposing back side of the exhaust duct;
the additional exhaust duct is located in the second duct compartment, wherein the additional inlet is located on a front side of the additional exhaust duct and the additional outlet is located on an opposing back side of the additional exhaust duct;
the fan is located in the central compartment; and
the vent housing is configured to guide the cabinet exhaust in a vertical direction, such that the cabinet exhaust is vented from a top of the vent assembly.

10. The electrochemical cell module of claim 1, wherein:
the electrochemical cells comprise fuel cells; and
the exhaust comprises a cathode exhaust of the fuel cells.

11. A combined heat and power (CHP) system comprising:
the electrochemical cell module of claim 1;
a thermal system; and
an exhaust manifold configured to connect the outlets of the exhaust ducts to the thermal system.

12. The CHP system of claim 11, wherein the thermal system comprises a steam generator, an adsorption chiller, a thermoelectric generator, a hot water heater, a Rankine cycle device, or a combination thereof.

13. A method of operating the electrochemical cell module of claim 1, the method comprising:
operating the electrochemical cells to generate power or hydrogen and to output an exhaust;
vertically lifting the filter cartridge out of the exhaust duct using a servicing tool while the electrochemical cells are operating; and
vertically lowering a replacement filter cartridge containing a replacement particulate filter into the exhaust duct while the electrochemical cells are operating.

14. The method of claim 13, further comprising providing the exhaust to a thermal system.

15. A method of operating an electrochemical cell module wherein electrochemical cells are located in a module housing, the method comprising:
generating either power or hydrogen from the electrochemical cells located in the module housing;
generating exhaust from the electrochemical cells located in the module housing; and
venting the exhaust through a vent housing attached to the module housing, wherein venting the exhaust further comprises:
passing the exhaust through an exhaust duct having an inlet that receives the exhaust from the module housing and an outlet that directs the exhaust away from the module housing; and
passing the exhaust through a removable filter cartridge located in the exhaust duct, wherein the removable filter cartridge comprises a particulate filter.
